# EUROPÄISCHE PATENTSCHRIFT

(11) **EP 0 392 441 B1**
(45) Veröffentlichungstag und Bekanntmachung des Hinweises auf die Patenterteilung: **05.01.1994**
(21) Anmeldenummer: 90106817.1
(22) Anmeldetag: 10.04.1990
(51) Int. Cl.: F16K 11/00, F16K 11/072, F16K 3/08

(54) **Misch-Absperrarmatur**
Mixture shut-off armature
Armature d'arrêt à mixture

(30) Priorität: 12.04.1989 HU 175989
(43) Veröffentlichungstag der Anmeldung: 17.10.1990
(73) Patentinhaber: KLUDI-ARMATUREN PAUL SCHEFFER, D-58730 Fröndenberg (DE); EGGENFELDER ALUMINIUMOXYD KERAMIK FABRIK GmbH, D-84307 Eggenfelden (DE)
(72) Erfinder: Scheffer, Paul, D-5758 Fröndenberg (DE)
(74) Vertreter: Fritz, Herbert, Dipl.-Ing.

(56) Entgegenhaltungen:
- EP-A- 0 277 584
- DE-A- 2 937 474
- GB-A- 2 070 738
- US-A- 2 564 529
- US-A- 4 420 142
- US-A- 4 672 999

## Beschreibung

Die Erfindung bezieht sich auf eine Misch-Absperrarmatur mit den Merkmalen nach dem Oberbegriff des Anspruches 1.

Bei Armaturen dieser Art (siehe z.B. DE-A-29 37 474) sind zum Absperren des Wasserflusses und zur Regelung des Warm-Kaltwasserstromes zwei Scheiben vorgesehen, nämlich eine feststehende Durchflußscheibe aus Keramik und eine bewegliche Steuerscheibe. In der Durchflußscheibe ist mindestens eine Einlaßöffnung für Kaltwasser, mindestens eine Einlaßöffnung für Warmwasser und mindestens eine Auslaßöffnung vorgesehen, in der beweglichen Steuerscheibe eine Öffnung. In geschlossenem Zustand befindet sich ein kompakter Teil der Steuerscheibe gegenüber den Einlaßöffnungen der Durchflußscheibe, wogegen in geöffnetem Zustand die in der Steuerscheibe ausgebildete Öffnung die in der Durchflußscheibe ausgebildete Auslaßöffnung mit der Kalteinlaßöffnung bzw. der Warmeinlaßöffnung verbindet. Mit der Bewegung der Steuerscheibe kann der relative Wert des Wasserflusses d.h. die Temperatur und die Menge des ausfließenden Wassers geregelt werden.

Darüberhinaus sind allgemeiner Stand der Technik, Misch-Absperrarmaturen mit einer Regelung durch keramische Steuerscheiben, bei denen zusätzlich für Temperatur- und Mengenregelung eine Umstellung auf Wanne oder Dusche möglich ist, wobei dafür jedoch besondere Umstellorgane, z.B. als Druckknopf ausgebildet, vorgesehen sind. Diese im allgemeinen mit O-Ring abgedichteten Umstellvorrichtungen haben den Mangel, daß sich vielfach Wasserstein ansetzt, was die Betriebssicherheit negativ beeinflußt und vielfach auch eine Änderung des Wasserdruckes hervorruft.

Die Aufgabe der Erfindung besteht in der Ausbildung einer Misch-Absperrarmatur mit einer Umstellmöglichkeit Wanne - Dusche, für die es jedoch keinen besonderen Umstellmechanismus bedarf.

Diese Aufgabe wird durch eine Mischabsperrarmatur mit den Merkmalen nach Anspruch 1 gelöst.

Die abhängigen Ansprüche haben bevorzugte Ausführungsmöglichkeiten zum Inhalt.

Bei einer solchen Armatur ist die Umstellung Wanne - Dusche in das Regelsystem für die Regelung der Wassermenge und Wassertemperatur integriert. Die Umstellung erfolgt allein durch eine besondere Bewegung der Steuerscheibe mit Hilfe des Betätigungshebels, mit dem die Steuerscheibe auch für die Regelung der Wassermenge und Wassertemperatur bewegt wird. In der feststehenden Durchflußscheibe ist ein Halbkreisbereich für die Dusche, der andere Halbkreisbereich für die Wanne vorgesehen. Die Umstellung Wanne - Dusche erfolgt somit einfach durch Herumschwenken des Hebels um 180°. In jedem dieser Bereiche kann die Temperatur durch die Drehbewegung des Hebels gesteuert werden, während die Wassermenge durch Anheben bzw. Absenken des Betätigungshebels erfolgt, wobei die Steuerscheibe sich radial verschiebt.

Die Ausführung und Funktion einer Misch-Absperrarmatur (Wanne-Dusche-Armatur, Zweiweg-Absperrarmatur) der Erfindung wird nachfolgend anhand der beiliegenden Zeichnungen erläutert; es zeigen:
- Fig. 1: eine Draufsicht einer Armatur nach der Erfindung;
- Fig. 2: stellt perspektivisch eine Keramik-Flachdichtung dieser Armatur in Einzelteilen dar;
- Fig. 3: zeigt in einer Ansicht von unten eine vorteilhafte Ausführungsform einer Durchflußscheibe der Keramik-Flachdichtung;
- Fig. 4: ist ein Schnitt durch die Durchflußscheibe nach IV-IV von Fig. 3;
- Fig. 5: ist eine Draufsicht auf die Durchflußscheibe;
- Fig. 6: zeigt die Ansicht von unten bei einer bevorzugten Ausführungsform einer Steuerscheibe der Keramik-Flachdichtung;
- Fig. 7: ist ein radialer Schnitt durch die Steuerscheibe;
- Fig. 8: stellt die Steuerscheibe in Draufsicht dar.

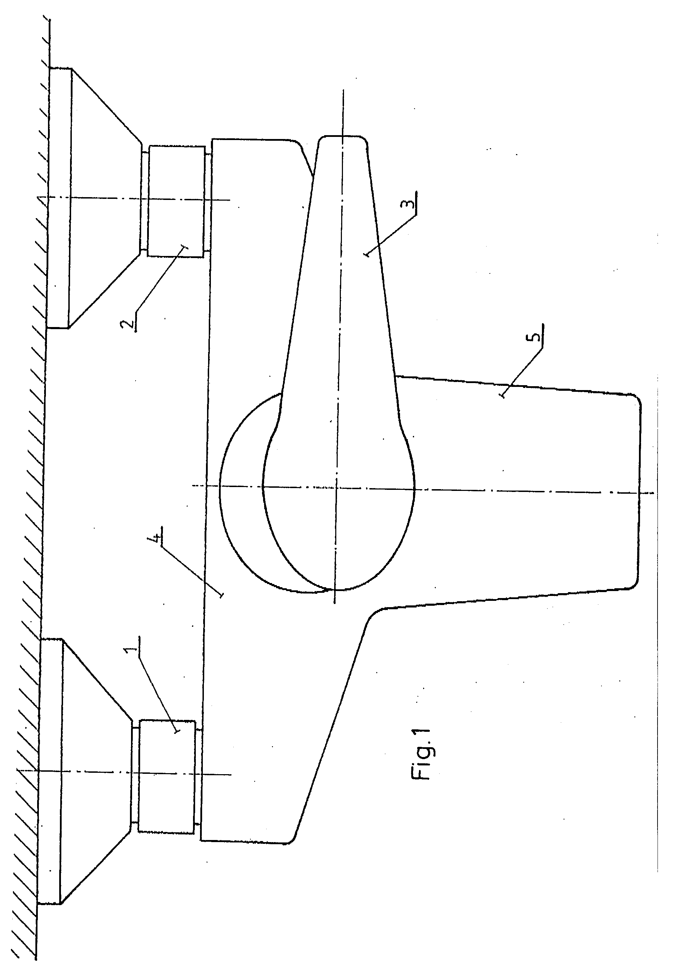

Wie aus Fig. 1 hervorgeht, hat die Wanne-Dusche-Armatur nach der Erfindung, einen Kaltanschluß 2, einen Warmanschluß 1, einen Schaltarm (Betätigungshebel) 3, einen Körper 4 und einen Abflußstumpf 5. Die Temperatur des durch den Abflußstumpf 5 fließenden Wassers kann durch Drehung des Schaltarmes 3, die Wassermenge durch dessen Hebung vom Körper 4 geändert werden.

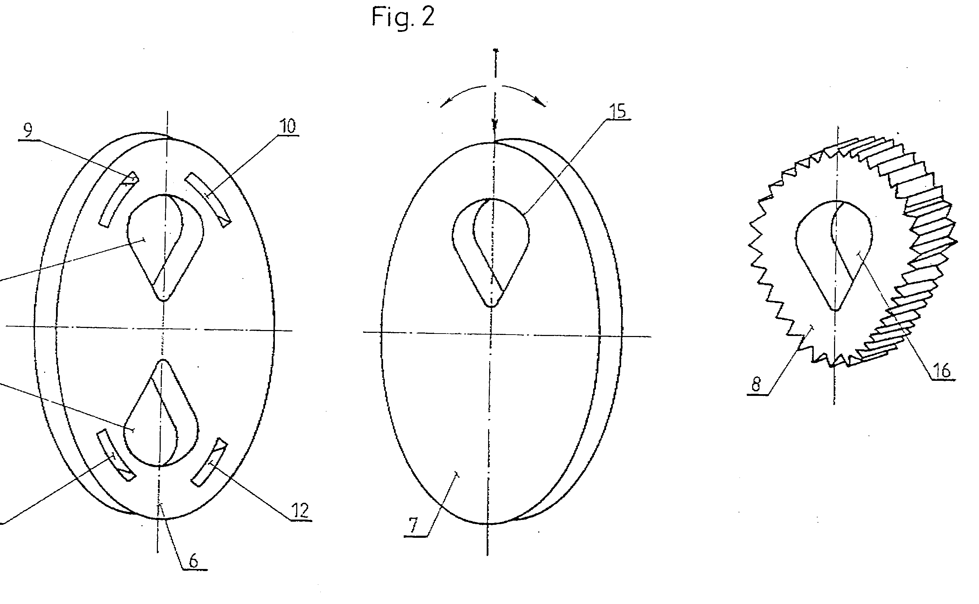

Dabei ändert der Schaltarm 3 die relative Lage einer Steuerscheibe 7 zu einer Durchflußscheibe 6. Aus Fig. 2 ist ersichtlich, daß in der Durchflußscheibe 6 eine erste Einlaßöffnung 9 für Kaltwasser, eine erste Einlaßöffnung 10 für Warmwasser, eine Wanneauslaßöffnung 11 ausgebildet sind und außerdem eine zweite Einlaßöffnung 12 für Warmwasser, eine zweite Einlaßöffnung 13 für Kaltwasser und eine Duschauslaßöffnung 14. In der Steuerscheibe 7, die sich durch Betätigung des Schaltarmes 3 verschiebt bzw. verdreht und die sich über der Durchflußscheibe 6 befindet, ist eine Übergangskammer 15 ausgebildet und dahinter in einem Kammerkörper 8 eine Mischkammer 16.

Aus Fig. 2 ist ersichtlich, daß in der abgebildeten Position, wenn Durchflußscheibe, Steuerscheibe und Kammerkörper aufeinanderliegen, durch die Übergangskammer 15 und die dahinterliegende Mischkammer 16 eine Verbindung hergestellt wird zwischen der ersten Einlaßöffnung 9 für Kaltwasser und der ersten Einlaßöffnung 10 für Warmwasser einerseits und der Wannenauslaßöffnung 11 andererseits. Dagegen wird durch Drehung der Steuerscheibe um 180° durch die Übergangskammer 15 und die Mischkammer 16 eine Verbindung hergestellt zwischen der zweiten Einlaßöffnung 13 für Kaltwasser und der zweiten Einlaßöffnung 12 für Warmwasser einerseits und der Duschauslaßöffnung 14 andererseits, jeweils abhängig von der Lage der Steuerscheibe 7.

Die im Kammerkörper ausgebildete Mischkammer 16 sichert eine bessere Vermischung des Kaltwassers und des Warmwassers.

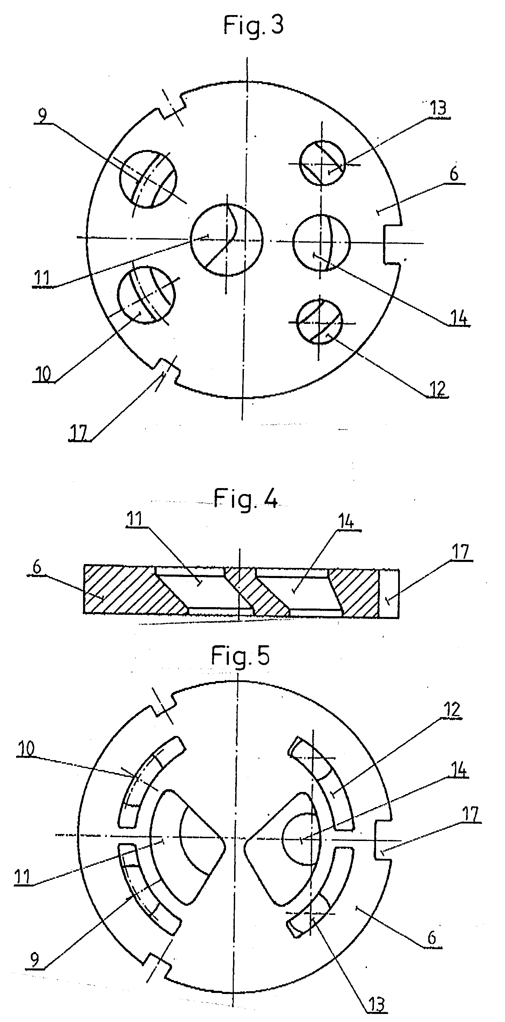

Fig. 3 bis 5 zeigen die Durchflußscheibe 6, wie sie bei einer konkreten Ausführung der erfindungsgemäßen Armatur angewendet wurde, in drei Ansichten.

Aus den genannten Zeichnungen ist ersichtlich, daß die erste Einlaßöffnung 9 für Kaltwasser, die erste Einlaßöffnung 10 für Warmwasser, die Wannenauslaßöffnung 11 sowie die zweite Einlaßöffnung 12 für Warmwasser, die zweite Einlaßöffnung 13 für Kaltwasser sowie die Duschauslaßöffnung 14 auf der der Steuerscheibe 7 anliegenden Seite der Durchflußscheibe 6 im Bereich der kreissektorförmigen Gestaltung der in der Steuerscheibe 7 ausgebildeten Übergangskammer 15 liegen. Dagegen sind die Öffnungen in der anderen Seite der Durchflußscheibe 6 kreisförmig um eine Anpassung zu den Einlaß- bzw. Auslaßrohren zu sichern.

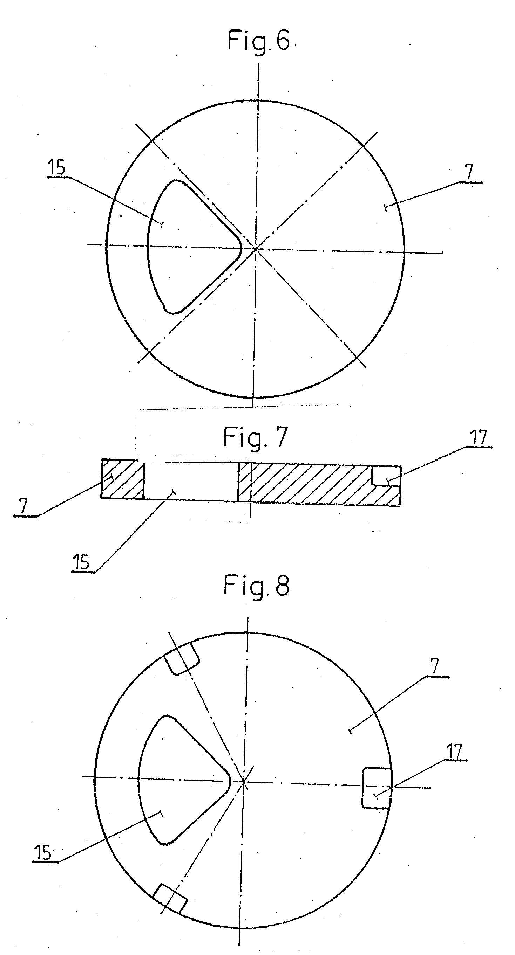

Auf Fig. 6 bis 8 ist ein konkretes Ausführungsbeispiel der Steuerscheibe 7 in drei Ansichten abgebildet.

An der Durchflußscheibe 6 und an der Steuerscheibe 7 sind, um eine richtige Positionierung zu erreichen, Nuten angebracht.

Der Vorteil der erfindungsgemäßen Armatur besteht darin, daß durch deren Anwendung die Umschaltung zwischen Wanne-Dusche oder ähnlichen Einrichtungen, ohne separates Schaltelement realisierbar ist. Dadurch kann der Aufbau einer Zweiweg-Armatur mit Regeleinrichtungen vereinfacht und die Betriebssicherheit verbessert werden.

## Patentansprüche

1. Misch-Absperrarmatur, bei der zur Regelung zwei aufeinanderliegende Scheiben (6,7) vorgesehen sind, nämlich
- eine feststehende Durchflußscheibe (6) aus Keramik mit mindestens einer Einlaßöffnung (9,13) für Kaltwasser, mindestens einer Einlaßöffnung (10,12) für Warmwasser und mindestens einer Auslaßöffnung (11,14); sowie
- eine bewegliche Steuerscheibe (7) mit einer Öffnung (15),
wobei die Regelung der Wassertemperatur und der Wassermenge durch die relative Lage der Steuerscheibe (7) gegenüber der Durchflußscheibe (6) erfolgt, dadurch gekennzeichnet, daß
- die Durchflußscheibe (6) durch einen ersten Durchmesser in zwei Halbkreise (Halbkreis für Duschbetrieb und Halb kreis für Wannenbetrieb) unterteilt ist, wobei im Umfangsbereich eines jeden dieser beiden Halbkreise eine Einlaßöffnung (9,13) für Kaltwasser und eine Einlaßöffnung (10,12) für Warmwasser und im zentralen Bereich eines jeden dieser beiden Halbkreise eine Auslaßöffnung (Wannen auslaßöffnung 11, Duschauslaßöffnung 14) gebildet ist;
- die Auslaßöffnungen (Wannenauslaßöffnung 11, Duschauslaßöffnung 14) wie auch die Einlaßöffnungen für Kaltwasser (9,13) und Warmwasser (10,12) symmetrisch zu einem zweiten Durchmesser der Durchflußscheibe (6), der senkrecht zum ersten Durchmesser ist, liegen;
- durch die als Übergangskammer ausgebildete und in einem Quadranten der gleichfalls keramischen Steuerscheibe (7) vorgesehene Öffnung (15) eine Verbindung zwischen den Einlaßöffnungen (9,10;12,13) und der Auslaßöffnung (11;14) des jeweiligen Halbkreises der Durchflußscheibe (6) hergestellt werden kann,
wobei die Übergangskammer (15) durch Drehen der Steuerscheibe (7) um 180° in jeweils den einen oder anderen der beiden Halbkreise der Durchflußscheibe (6) bringbar ist, wobei im jeweiligen Halbkreis die Temperaturregelung durch Drehen und die Mengenregelung durch radiales Verschieben der Steuerscheibe (7) gegenüber der Durchflußscheibe (6) erfolgt.

2. Misch-Absperrarmatur nach Anspruch 1, dadurch gekennzeichnet, daß die Auslaßöffnungen (11, 14) in der Durchflußscheibe (6) an der Steurscheibe (7) zugewandten Oberfläche die Form von Kreissektoren haben.

3. Misch-Absperrarmatur nach Anspruch 1, dadurch gekennzeichnet, daß die Übergangskammer (15), die Form eines Kreissektors hat.

4. Misch-Absperrarmatur nach Anspruch 1, dadurch gekennzeichnet, daß die Einlaßöffnungen (9, 10, 12, 13) als bogenförmige Schlitze ausgebildet sind.

5. Misch-Absperrarmatur nach Anspruch 1, dadurch gekennzeichnet, daß die Öffnungen in der Durchflußscheibe (6) an der der Steuerscheibe (7) gegenüberliegenden Oberfläche kreisförmig geformt sind.

6. Misch-Absperrarmatur nach Anspruch 1, dadurch gekennzeichnet, daß die Übergangskammer (15) in der Steuerscheibe (7) durch eine Mischkammer (16) eines Kammerkörpers (8) fortgesetzt ist.

## Claims

1. Mixing and shut-off valve in which two discs (6, 7) positioned one upon the other are provided for adjustment, namely,
- one stationary flow-type disc (6) of ceramics with at least one inlet opening (9,13) for cold water, at least one inlet opening (10, 12) for hot water and at least one outlet opening (11, 14); as well as
- one movable control disc (7) with an opening (15), the adjustment of the water temperature and the volume of water being effected by the position of the control disc (7) relative to the flow-type disc (6), characterised in that
- the flow-type disc (6) is divided by a first diameter in two semicircles (semicircle for shower operation and semicircle for bath operation), in the circumferential region of each of these two semicircles an inlet opening (9, 13) for cold water and an inlet opening (10, 12) for hot water being provided, whereas in the central region of each of these two semicircles a outlet opening (bath outlet opening 11, shower outlet opening 14) being provided;
- the outlet openings (bath outlet opening 11, shower discharge opening 14) as well as the inlet openings for cold water (9, 13) and hot water (10, 12) are positioned symmetrically relative to a second diameter of the flow-type disc (6), said second diameter being vertical relative to the first one;
- by means of the opening (15) formed as transition chamber and provided in a quadrant of the likewise ceramic control disc (7) a connection can be made between the inlet openings (9, 10; 12, 13) and the outlet opening (11; 14) of the respective semicircle of the flow-type disc (6), the transition chamber (15) being able to be positioned in the one or in the other of the two semicircles by rotating the control disc (7) by 180°, in the respective semicircle, the temperature regulation being effected by rotating, and the volume regulation being effected by radially displacing the control disc (7) relative to the flow-type disc (6).

2. Mixing and shut-off valve as claimed in claim 1, characterised in that the outlet openings (11, 14) in the flow-type disc (6) have, on the surface facing the control disc (7), the shape of circular sectors.

3. Mixing and shut-off valve as claimed in claim 1, characterised in that the transition chamber (15) has the shape of a circular sector.

4. Mixing and shut-off valve as claimed in claim 1, characterised in that the inlet openings (9, 10, 12, 13) are shaped as arched slots.

5. Mixing and shut-off valve as claimed in claim 1, characterised in that the openings in the flow-type disc (6) are circularly shaped at the surface opposite to the control disc (7).

6. Mixing and shut-off valve as claimed in claim 1, characterised in that the transition chamber (15) in the control disc (7) is continued by a mixing chamber (16) of a chamber body (8).

## Revendications

1. Garniture de mélange et d'arrêt dans laquelle deux disques (6, 7), mis l'un sur l'autre, sont prévus pour le réglage, à savoir,
- un disque d'écoulement (6) fixe en céramique avec au moins une ouverture d'admission (9, 13) pour l'eau froide, au moins une ouverture d'admission (10, 12) pour l'eau chaude et au moins une ouverture d'échapement (11, 14); et
- un disque de commande (7) mobile avec une ouverture (15), le réglage de la température d'eau et de la quantité d'eau résulte par la position du disque de commande (7) relative à la position du disque d'écoulement (6), caractérisée en ce que
- le disque d' écoulement (6) est subdivisé par un premier diamètre en deux demi-cercles (demi-cercle pour service de douche et demi-cercle pour service de baignoire), dans la région circonférentielle de chaque demi-cercle une ouverture d'admission (9, 13) pour l'eau froide et une ouverture d'admission (10, 12) pour l'eau chaude étant prévue et dans la région centrale de chaque demi-cercle une ouverture d'échapement (ouverture d'échapement pour la baignoire 11, ouverture d'échapement pour la douche 14) étant prévue;
- les ouvertures d'échapement (ouverture d'échapement pour la baignoire 11, ouverture d'échapement pour la douche 14) et aussi les ouvertures d'admission pour l'eau froide (9, 13) et l'eau chaude (10, 12) sont situées symétriquement à un autre diamètre du disque d'écoulement (6), l'autre diamètre étant perpendiculaire sur le premier diamètre;
- au moyen de la ouverture (15) formée comme chambre de transition et prévue dans un quadrant du disque de commande (7), aussi en céramique, il est possible d'établir une communication entre les ouvertures d'admission (9, 10; 12, 13) et l'ouverture d'échapement (11; 14) du demi-cercle respectif du disque d'écoulement (6), la chambre de transition (15) ayant la possibilité d'être mise dans l'un ou l'autre des deux demi-cercles du disque d'échapement (6) par tourner le disque de commande (7) de 180°, dans le demi-cercle relatif, le réglage de la température résulte par tourner le disque de commande (7) relativement au disque d'échapement (6) et le réglage de la quantité résulte par déplacer radialement le disque de commande (7) relativement au disque d'échapement (6).

2. Garniture de mélange et d'arrêt selon la revendication 1, caractérisée en ce que les ouvertures d'échapement (11, 14) dans le disque d'écoulement (6) ont la forme des secteurs de cercle à la surface tournée vers le disque de commande (7).

3. Garniture de mélange et d'arrêt selon la revendication 1, caractérisée en ce que la chambre de transition (15) a la forme d'un secteur de cercle.

4. Garniture de mélange et d'arrêt selon la revendication 1, caractérisée en ce que les ouvertures d'admission (9, 10, 12, 13) sont formées comme fentes en arc.

5. Garniture de mélange et d'arrêt selon la revendication 1, caractérisée en ce que les ouvertures dans le disque d'écoulement (6) sont formées en arc à la surface tournée vers le disque de commande (7).

6. Garniture de mélange et d'arrêt selon la revendication 1, caractérisée en ce que la chambre de transition (15) dans le disque de commande (7) est continuée par une chambre de mélange (16) d'un corps de chambre (8).
